Europäisches Patentamt

European Patent Office

Office européen des brevets

(19)

(11) Publication number: **0 140 517**
**B1**

# EUROPEAN PATENT SPECIFICATION

(12)

(45) Date of publication of patent specification: **18.05.88**

(21) Application number: **84305744.9**

(22) Date of filing: **22.08.84**

(51) Int. Cl.⁴: **A 23 L 1/236,** A 23 L 2/38,
A 23 L 2/40

(54) Non-saccaride sweetened product.

(30) Priority: **22.08.83 US 525197**

(43) Date of publication of application:
**08.05.85 Bulletin 85/19**

(45) Publication of the grant of the patent:
**18.05.88 Bulletin 88/20**

(84) Designated Contracting States:
**AT BE CH DE FR GB IT LI LU NL SE**

(56) References cited:
**EP-A-0 067 595**
**DE-A-2 556 109**
**DE-A-2 620 349**
**DE-B-2 022 499**
**US-A-3 780 189**

(73) Proprietor: **GENERAL FOODS CORPORATION**
**250 North Street**
**White Plains, N.Y. 10625 (US)**

(72) Inventor: **Pettigrew, Susan Jill**
**50, Tashua Lane**
**Trumbull Connecticut 06611 (US)**
Inventor: **Silka, Linda Anne**
**1618, Summit Street**
**Yorktown Heights New YOrk 10598 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

Background of the invention

The present invention relates to non-saccaride sweetened compositions, more particularly to a synergistic combination of dipeptide, L-aspartic acid derivative, L-aspartyl-L-phenylalanine methyl ester commonly known as APM and cyclamic acid or a salt thereof, and most particularly to a foodstuff comprising APM and a cyclamate.

Since the discovery that APM is an effective sweetening agent (U.S. Patent 3,942,131) numerous inventors have explored how to use APM in various food products. Scott, U.S. Patent 3,780,189, discloses that both the combination of APM and saccharin and the combination of APM and sucrose exhibit enhanced sweetness. However, Scott's theoretical model suffers from both a lack of sufficient data from which reasonable interpolations can be made (Table 2, $P_I$ values) and a systematic and substantial under-estimation of the sweeteners' actual potencies.

Others have reported synergistic effects when APM is combined with more than one other known sweeteners: Cloninger et al. in 170 *Science* 81—82 (April 29, 1970) (APM, sucrose, sodium saccharine and calcium cyclamate) and Finucane, Canadian Patent 1,043,158 (APM, sodium saccharin, and either sodium or calcium cyclamate). Cloninger et al., in making their assessment, have ignored the fact that sweeteners are more potent at lower concentration than the same sweeteners are at higher concentrations (See Scott, U.S. Patent 3,492,131, Table 2, Columns $P_I$ and $P_{II}$). Consequently, as Cloninger et al.'s small "synergy" is likely just the result of expecting less than the actual potency of these sweeteners at the levels used. Furthermore, Finucane evaluated the combination of APM and sodium cyclamate and reported that this combination had a poorer taste quality and was less sweet than a control having only APM.

Notwithstanding the uncertainty as to whether sweetness is enhanced by combining APM with another known sweetener, Feldman et al., Canadian Patent 1,027,113, disclosed that the compound L-aspartyl-L-phenylalanine methyl ester saccharinate is more soluble than: APM; a saccharine salt, such as sodium saccharine; or a mixture of APM and a saccharine salt. Additionally, Feldman et al. suggest that this same result would occur with L-aspartyl-L-phenylalanine methyl ester cyclamate.

Larson-Powers et al., 43 *J. Food Sci.* 41 (1978), which is hereby incorporated by reference, provides an alternative basis for understanding the interactions among sweeteners when APM is one of the sweeteners. First of all, it is important to note that these interactions are supra-threshold. Consequently, "unexpected sweetener interactions" at subthreshold levels which are effective to produce a detectable sweetness level are not relevant to their discussion, nor are the effects of combining subthreshold levels of sweeteners of practical utility.

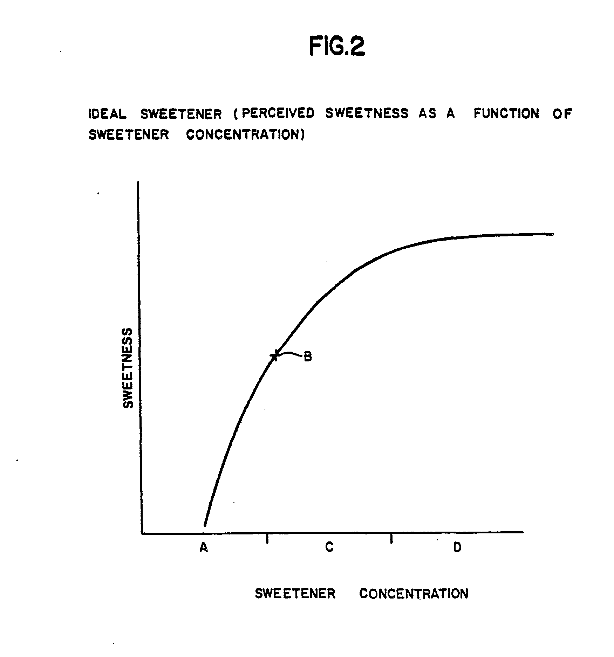

It is expected that the sweetness of APM as a function of APM concentration should resemble the hyperbolic type curve shown in Fig. 2. Briefly all regions in this curve are above the sweetness perception threshold for the sweetener. Initially, in region A, a small increase in the APM concentration produces a large increase in the perceived sweetness. However, as the APM concentration approaches concentration B, at the upper limit of the A region, the increase in the perceived sweetness decreases with each equivalent increase in APM concentration. Beyond concentration B, an increase in the sweetener concentration continues to produce an increase in the perceived sweetness. However, per unit increase of the sweetener concentration, the increase in perceived sweetness is progressively less as the sweetener concentration increases in Region C. This trend in region C climaxes in region D, where further increases in the sweetness concentration do not result in further increases in the perceived sweetness.

Larson-Powers et al. also teach that the perception of cyclamate sweetness is similar to that of APM. Consequently, the first step in examining the interactions between APM and cyclamates is to establish a scale appropriate for those comparisons. Secondly, the sweetness of each sweetener is determined on this scale. Then the sweetness values for the APM and the cyclamate, individually evaluated, are added. The difference between the actual sweetness of the combination (APM-cyclamate) and the sum of the sweetness individual sweetness is evaluated in light of the position of the sum of the sweetener's individual sweetness values on the hyperbolic-type curve. When the actually observed sweetness is greater than the sweetness predicited by this type of analysis, then there is an interaction between the sweeteners which can be properly called synergy.

DE—B—2,022,499 discloses sweeteners containing APM and cyclamate in proportions of either 1:7 or 1:10 APM:cyclamate, which exhibit some synergistic sweetening action.

Summary of the invention

The invention provides a foodstuff comprising a food-acceptable, low calorie sweetening component and a food approved flavouring component wherein the proportion of sweetening composition is between 0.03% and 0.08% of the foodstuff on an as consumed, weight basis, said sweetening composition consists essentially of aspartame and a cyclamate and the ratio of aspartame to cyclamate is between 1 part aspartame to 6 parts cyclamate and 2 parts aspartame to 1 part cyclamate, and the pH of said foodstuff is between 2.0 and 7.5.

In respect of the designated state Austria, the invention provides a method of preparing a foodstuff comprising combining a food-acceptable, low calorie sweetening component and a food approved flavouring component wherein the sweetening composition is added in a proportion of between 0.03% and 0.08% of the foodstuff on an as consumed, weight basis, said sweetening composition consists essentially of aspartame and a cyclamate, the ratio of aspartame to cyclamate being from 1 part aspartame to 6 parts cyclamate and 2 parts aspartame to 1 part cyclamate, wherein the pH of said foodstuff is adjusted to between 2.0 and 7.5

Preferably the proportion of flavoring component is between 0.001% and 0.5% of the foodstuff on an as consumed, weight basis.

Preferably the foodstuff further comprises a food approved coloring agent wherein the proportion of said coloring agent is between 0.00001% and 0.5% of the foodstuff on an as consumed, weight basis.

Said foodstuff may be a low-calorie beverage, a low-calorie dessert, an aqueous condiment or a chewing gum for example.

Brief description of the drawings

Figure 1 shows the functional relationship between sweetener concentration and preceived sweetness—when the sweetener is a 1:2 APM:cyclamate blend—as a function of sweetener of sweetener concentration for a beverage of the instant invention.

Figure 2 shows the expected hyperbolic-type curve relationship between sweetener concentration and perceived sweetness, as a function of sweetener concentration.

Figure 3 shows the functional relationship between sweetener concentration and preceived sweetness—for APM and cyclamate, each individually—as a function of sweetener concentration for a beverage made from the mix of the instant invention.

Figure 4 shows the functional relationship between sweetener concentration and preceived sweetness—when the sweetener is a 1:2 APM:cyclamate blend—as a function of the sweetener concentration in an unflavored buffer system.

Figure 5 shows the functional relationship between the APM:cyclamate ratio at a sweetness concentration 0.064% and the resulting preceived sweetness expressed as a sucrose equivalent, as a function of the sweetener concentration in fruit punch.

Detailed description of the invention

If the foodstuff of the instant invention is a dry mix, the sweetening component should be dry blended with the other ingredients. Nonetheless, in a dry mix the ingredients could be combined as a solution, and thereafter dried, but it is preferred that all of the ingredients are dry blended. Alternatively, the foodstuff could be a ready-to-consume product, in which case, wet or dry blending is acceptable.

Typical foodstuffs, including pharmaceutical preparations, in which the sweetener composition thereof of the present invention may be used are, for example, beverages, including soft drinks, carbonated beverages, ready-to-mix beverages and the like, infused foods (e.g., fruits or vegetables), sauces, condiments, salad dressings, juices, syrups, desserts, including puddings, gelatin and frozen desserts, like ice creams, sherbets and icings, confections, chewing gum, intermediate moisture foods (e.g., dog foods), toothpaste, mouthwashes and the like.

In formulating the foodstuff it is important that the ratio of APM:cyclamate wherein the cyclamate is cyclamic acid, a derivative thereof, or combinations thereof be between about 1:6 and about 2:1. Nonetheless, it is preferred that the APM:cyclamate ratio be between about 1:3 and 1:1.

There are several cumulative considerations that need to be satisfied when combining the sweetening component with an appropriate APM:cyclamate ratio with other ingredients to form the foodstuff. A primary, but not independent, consideration is the level of sweetness desired in the foodstuff prepared according to the instant invention. A useful scale for rating the level of sweetness in a foodstuff is its sucrose equivalent; for example, a beverage with a sucrose equivalent of 8 is rated by an expert taste panel as having the same sweetness as a standard beverage whose sweetening component is 8 grams of sucrose in 100 ml of the standard beverage. It is preferred that a foodstuff prepared according to the instant invention have a sucrose equivalent of between about 6 and about 20. It is more preferred that the foodstuff's sweetness equivalent be between about 7 and about 15; and most preferably between about 8.5 and about 11.5.

To achieve the desired sweetness level as specified above, the sweetening component will typically be between about 1 and about 25%, by weight, of the foodstuff when the foodstuff is a dry mix formulated for subsequent hydration. It is preferred that the sweetening component be between about 1 and about 15% of this dry mix, and it is most preferred that the sweetening component be between about 3 and about 12% of the dry mix. However, when expressed on an as consumed basis of the foodstuff, it is preferred that the total sweetening component concentration be at least 0.03%, by weight. Still, it is more preferred that when expressed on an as consumed basis the total sweetening component be between about 0.035 and about 0.08%, by weight. Nonetheless, some flavoring agents reduce the effectiveness of sweeteners: e.g. tea. To achieve the desired sucrose equivalency in the presence of a sweetness reducing flavorant, at least 0.04% of the foodstuff on an as consumed weight basis should be the sweetening component of the instant invention.

While the pH of the foodstuff of the instant invention is not critical, it is preferred that the pH of the foodstuff as consumed of the instant invention be between 2.0 and 5.5. However, it is more preferred that the foodstuff's pH, as consumed, be between about 2.5 and 4.0. In an illustrative embodiment of the instant

3

invention, a dry beverage mix produces the desired pH through the interaction of a buffering and acid component.

The buffering and acid component in a dry foodstuff mix of the instant invention may include any buffering agent which is approved for food use. However, it is preferred that the buffering component: monocalcium phosphate, tricalcium phosphate, potassium citrate, or a combination thereof. The amount of the buffering agent in the dry foodstuff mix will depend upon what buffering agent is used. Generally, however, monocalcium phosphate will be between about 0 and about 60%, by weight, but preferably between 0 and about 40% of the dry foodstuff mix; tricalcium phosphate will be between about 0 and about 20% but preferably between 0 and about 10% of the dry mix; and potassium citrate will be between about 0 and about 20% but preferably between 0 and about 10% of the dry mix.

Both the foodstuff and the foodstuff mix of the instant invention may also comprise an acid as part of the buffering and acid component. It is critical to the invention that this acid component be food approved. For a beverage illustrative embodiment of the instant invention, any food approved acid may be used; such as citric, phosphoric, malic, tartaric, fumaric, adipic, combinations thereof and the like. For a dry mix of the instant invention, any dry food approved acid such as citric, malic, tartaric, fumaric, adipic combinations thereof or the like may be used. However, a preferred acid in both the foodstuff and the foodstuff mix is citric acid.

While the foodstuff of the instant invention comprises a food approved flavoring component, to obtain the enhanced sweetness observed in the foodstuff of the instant invention, it is critical that the flavoring component be compatible with the sweetening component. As used in the instant specification, compatibility between a flavoring component and a sweetening component refers to the interactions of these components wherein the synergistic sweetness of the foodstuff is not suppressed. While some flavoring agents may never be compatible with the sweetening component of the instant invention, flavoring agents such as tea extracts, and presumably coffee extracts, are compatible only when the concentration of the sweetening component of the instant invention is at least 0.04%, by weight, on an as consumed basis. However, other flavoring, such as fruit-type flavorings (e.g., orange, cherry, punch, strawberry, grape, lemon, etc., such as Naarden International's Tropical Punch JM5541 or their Orange Flavor JM41021) appear to be compatible with the sweetening component of the instant invention whenever the level at this sweetening component is above the sweetening component's threshold level.

The dry foodstuff mix of the instant invention further comprises a coloring agent. The coloring agent must be food approved, stable when stored in a dry state, and present in an amount effective to impart a desirable color to the formed foodstuff.

Best mode for carrying out the invention

Example 1

The following ingredients were dry blended to form a non-saccaride sweetened beverage mix.

| Ingredient | Grams |
|---|---|
| Citrate phosphate, pH 2.9 buffer | 74.52 |
| Cyclamate | 6.50 |
| APM | 6.50 |
| Fruit flavor | 4.33 |
| Gum | 4.33 |
| Color | 2.18 |
| Salt and vitamins | 1.44 |

Once blended, 2.42 grams of the dry mix were disolved in 500 milliliters of water resulting in a beverage with a 0.064% sweetener concentration on an as-consumed basis. This beverage was evaluated as being a good, fruity drink.

# 0 140 517

Example 2

The following ingredients were dry blended to form an artificially sweetened beverage mix.

| Ingredients | Grams |
|---|---|
| Citrate-phosphate pH 3.2 buffer | 80.34 |
| APM | 3.55 |
| Cyclamate | 3.56 |
| Fruit Flavors | 9.38 |
| Colors | 1.38 |
| Vitamins | 0.79 |

Once blended, 2.53 grams of this mix were disolved in 500 milliliters of water resulting in a beverage with a 0.038% sweetener concentration on an as-consumed basis. The resulting beverage was described as being a desirably sweet, fruit punch.

Examples 3—9

In Examples 3—9 the amount of the sweetening component of the instant invention indicated below was added in the 500 ml of pH 3.2 phosphate buffer.

| Example | APM, gm | Cyclamate, gm | Average sucrose equiv. |
|---|---|---|---|
| 3 | 0.025 (0.005)* | 0.050 (0.010)* | 3.6 |
| 4 | 0.050 (0.010) | 0.100 (0.020) | 5.7 |
| 5 | 0.075 (0.015) | 0.150 (0.030) | 7.8 |
| 6 | 0.100 (0.020) | 0.200 (0.040) | 11.2 |
| 7 | 0.125 (0.025) | 0.250 (0.050) | 11.4 |
| 8 | 0.150 (0.030) | 0.300 (0.060) | 14.8 |
| 9 | 0.175 (0.035) | 0.350 (0.070) | 15.9 |

* The % by weight, on an as-consumed basis, is given in parentheses.

The sweetened water produced in Example 3—9 formulations were organoleptically evaluated by a trained taste panel for their sucrose equivalence by a sucrose equivalence sweetness matching procedure.

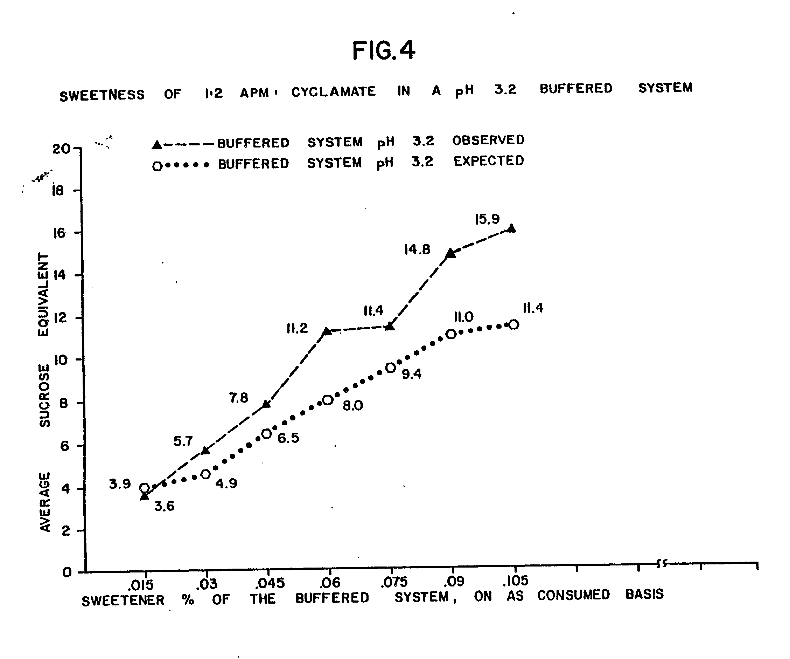

In the sucrose equivalence sweetness matching procedure, each member of a panel of 12 trained tasters was given a series of standard solutions and a series of the Example 3—9 samples. The standard solutions were composed of the pH 3.2, phosphate buffered, filtered water with 4, 8, 12, 16 or 20% sucrose, wherein the % sucrose is a weight/volume percent based on the volume of standard solution. When matching sweetness, the tasters were asked to identify the standard whose sweetness was closest to that of the sample the taster had evaluated. If the sweetness of the sample was judged not to be identical to that of any standard, the taster could then interpolate or extrapolate to determine the sample's sucrose equivalent. The average sucrose equivalent from the 12 tasters is reported above and also appears in Figure 4 in an actual sweetness preceived curve.

Examples 10—16

In Examples 10—16, APM, in the amounts indicated in the table below, was combined with 500 ml of filtered tap water containing a pH 3.2, phosphate buffer. These examples were then evaluated according to the sucrose equivalence procedure described for Examples 3—10.

| Example | APM, gm | Average sucrose equiv. |
|---------|---------|------------------------|
| 10 | 0.025 (0.005)* | 2.7 |
| 11 | 0.050 (0.010) | 3.2 |
| 12 | 0.075 (0.015) | 4.2 |
| 13 | 0.100 (0.020) | 5.0 |
| 14 | 0.125 (0.025) | 6.0 |
| 15 | 0.150 (0.030) | 7.0 |
| 16 | 0.175 (0.035) | 7.0 |

* The % by weight, on an as-consumed basis, is given in parentheses.

Examples 17—23

In Examples 17—23, sodium cyclamate, in the amounts indicated in the table below, was combined with 500 ml of filter tap water containing a pH 3.2, phosphate buffer was added. Again, these samples were evaluated according to the sucrose equivalence procedure described for Examples 3—10.

| Example | Cyclamate, gm | Average sucrose equiv. |
|---------|---------------|------------------------|
| 17 | 0.050 (0.010)* | 1.2 |
| 18 | 0.100 (0.020) | 1.7 |
| 19 | 0.150 (0.030) | 2.3 |
| 20 | 0.200 (0.040) | 3.0 |
| 21 | 0.250 (0.050) | 3.4 |
| 22 | 0.300 (0.060) | 4.0 |
| 23 | 0.350 (0.070) | 4.4 |

* The % by weight, on an as-consumed basis, is given in parentheses.

By adding the sucrose equivalents of the following pairs of Examples, the APM-cyclamate expected sweetness (baseline) curve of Figure 4 was obtained.

| Example pair | Expected sucrose equiv. |
|--------------|-------------------------|
| $\Sigma 10+17$ | 3.9 |
| $\Sigma 11+18$ | 4.9 |
| $\Sigma 12+19$ | 6.5 |
| $\Sigma 13+20$ | 8.0 |
| $\Sigma 14+21$ | 9.4 |
| $\Sigma 15+22$ | 11.0 |
| $\Sigma 16+23$ | 11.4 |

Examples 24—44

In Example 24—30, the sweetener compositions of Examples 3—9 were combined with the other components of Example 2 to produce fruit punch beverages with the following sweetener compositions:

6

| Example | APM (gm) | Cyclamate (gm) | Average sucrose equiv. |
|---|---|---|---|
| 24 | 0.025 (0.005)* | 0.050 (0.010)* | 3.2 |
| 25 | 0.050 (0.010) | 0.100 (0.020) | 4.8 |
| 26 | 0.075 (0.015) | . 0.150 (0.030) | 8.8 |
| 27 | 0.100 (0.020) | 0.200 (0.040) | 10.3 |
| 28 | 0.125 (0.025) | 0.250 (0.050) | 11.1 |
| 29 | 0.150 (0.030) | 0.300 (0.060) | 13.3 |
| 30 | 0.175 (0.035) | 0.350 (0.070) | 16.5 |

* The % by weight, on an as-consumed basis, is given in parentheses.

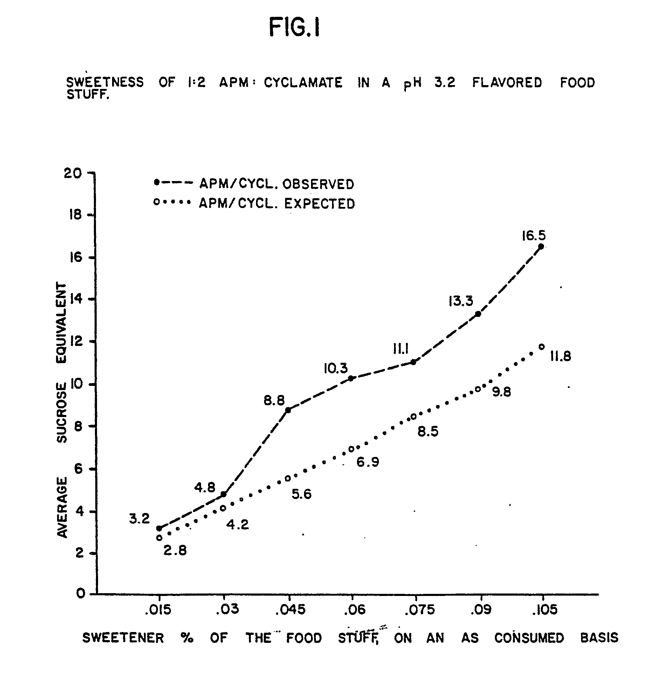

These samples were evaluated according to the procedure of Example 3—9 to obtain the reported Average Sucrose Equivalence given above. These Equivalence values are plotted in Figure 1 as the Actual Sucrose Equivalence Curve.

In Example 31—37, the sweetener compositions of Example 10—16 were combined with the other components of Example 2 to produce fruit punch beverages with the following sweetener compositions:

| Example | APM (gm) | Average sucrose equiv. |
|---|---|---|
| 31 | 0.025 (0.005)* | 1.5 |
| 32 | 0.050 (0.010) | 2.6 |
| 33 | 0.075 (0.015) | 3.4 |
| 34 | 0.100 (0.020) | 4.1 |
| 35 | 0.125 (0.025) | 5.1 |
| 36 | 0.150 (0.030) | 6.4 |
| 37 | 0.200 (0.035) | 7.3 |

* The % by weight, on an as-consumed basis, is given in parentheses.

These samples were also evaluated according to the procedures of Examples 3—9 to obtain the reported Average Sucrose Equivalence given above.

In Examples 38—44, the sweetener compositions of Examples 10—23 were combined with the other components of Example 2 to produce fruit punch beverages with the following sweetener compositions:

7

| Example | Cyclamate (gm) | Average sucrose equiv. |
|---------|----------------|------------------------|
| 38 | 0.050 (0.010)* | 1.3 |
| 39 | 0.100 (0.020) | 1.6 |
| 40 | 0.150 (0.030) | 2.2 |
| 41 | 0.200 (0.040) | 2.8 |
| 42 | 0.250 (0.050) | 3.4 |
| 43 | 0.300 (0.060) | 3.4 |
| 44 | 0.350 (0.070) | 4.5 |

* The % by weight, on an as-consumed basis, is given in parentheses.

These samples as well were evaluated according to the Example 3—9 procedure to obtain the Average Sucrose Equivalences reported above.

By adding the sucrose equivalents of the following pairs of Examples the APM-cyclamate expected sweetness (baseline) curve of Figure 1 was obtained.

| Example pair | Sucrose equiv. |
|--------------|----------------|
| $\Sigma 31+38$ | 2.8 |
| $\Sigma 32+39$ | 4.2 |
| $\Sigma 33+40$ | 5.6 |
| $\Sigma 34+41$ | 6.9 |
| $\Sigma 35+42$ | 8.5 |
| $\Sigma 36+43$ | 9.8 |
| $\Sigma 37+44$ | 11.8 |

Examples 45—55

The following ingredients were dry blended so as to form the basic mix to which a sweetening component was later added.

| Ingredient | Grams |
|------------|-------|
| Citric acid-phosphate buffer | 896.64 |
| Fruit flavors | 51.96 |
| Gum | 51.96 |
| Color | 26.16 |
| Vitamins and salt | 17.28 |

The above blend was divided into 12 samples of 87.0 grams. Each of these samples was further dry blended with the sweetening component listed below:

8

**0 140 517**

| | Sweetening component (in grams) | | |
|---|---|---|---|
| Example | APM | Cyclamate | Sucrose equiv. |
| 45 | 13.00 (0.064)* | — | 10.8 |
| 46 | 9.75 (0.048) | — | 8.3 |
| 47 | 6.50 (0.032) | | 5.1 |
| 48 | 3.25 (0.016) | | 4.1 |
| 49 | — | 13.00 (0.064)* | 4.8 |
| 50 | — | 9.75 (0.048) | 2.7 |
| 51 | — | 6.50 (0.032) | 2.2 |
| 52 | — | 3.25 (0.016) | 1.4 |
| 53 | 9.75 (0.048) | 3.25 (0.016) . | 9.9 |
| 54 | 6.50 (0.032) | 6.50 (0.032) | 11.1 |
| 55 | 3.25 (0.016) | 9.75 (0.048) | 9.6 |
| Σ46+52 | — | — | 9.7 |
| Σ47+51 | — | — | 7.3 |
| Σ48+50 | — | — | 6.8 |

* The % as-consumed weight basis is given in parentheses.

A portion of each of these Examples, 2.42 grams, was disolved in 500 milliliters of water. Thereafter, each sample was evaluated by a trained taste panel. The trained taste panel used a series of standard sucrose in solutions of the basic beverage mix containing 4, 6, 8, 10 and 12 grams of sucrose (but none of the sweetening component of the instant invention) per 100 ml and rated the Examples in terms of their sucrose equivalent. These results are reported above.

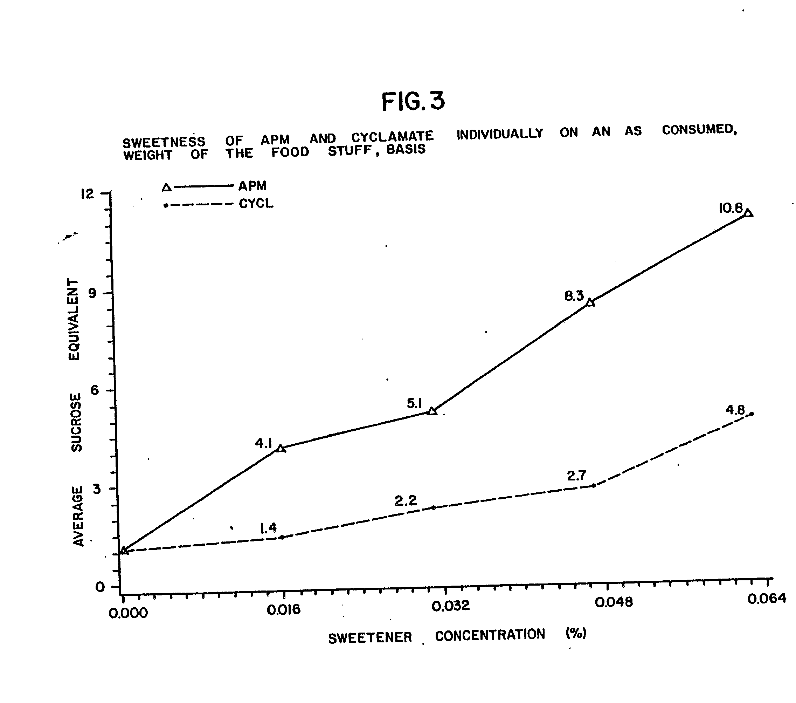

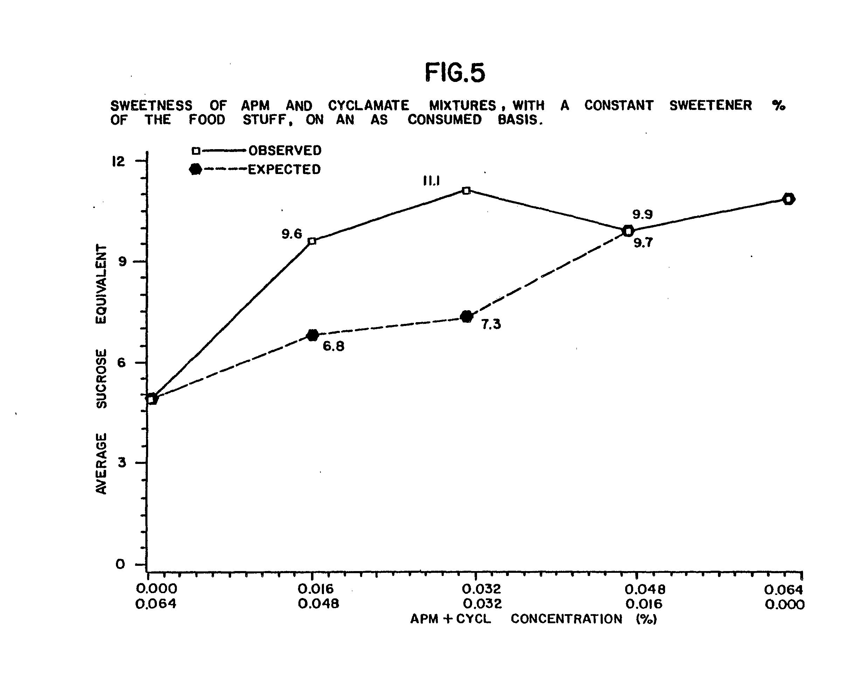

The results from Examples 45—52 are plotted on Fig. 3 and those results from Examples 53—55 are on Fig. 5 along with the sum of the sucrose equivalents for the APM and cyclamate combinations of: 46+52; 47+51; and 48+50.

Examples 56—65

Examples 45—55 were repeated except that the trained panel evaluated these samples using a single, 10% sucrose, standard. These results of this direct scaling procedure were as follows:

| Example | Direct scale sucrose equivalent |
|---|---|
| 56 | 11.8 |
| 57 | 6.0 |
| 58 | 5.4 |
| 59 | 2.3 |
| 60 | 4.1 |
| 61 | 2.7 |
| 62 | 1.3 |
| 63 | 1.4 |
| 64 | 12.7 |
| 65 | 11.5 |
| 66 | 12.3 |

Examples 67—73

Unsweetened, dry, strawberry flavored gelatin dessert mix was dry blended with one of the sweetening components listed below. The sweetened mix was combined with 475 ml of water and allowed to set. These samples were then compared, after cooling to 50°F (10°C) and obtaining a set, with a standard that containing 10 gm of sucrose per 100 ml by the trained taste panel so that the panel could evaluate the sweetness of these samples. The sweetness, on a direct sucrose scale, is given along with the sweetener compositions below.

| Example | Sweetening component (per 10 gm gelatin mix) | Direct scale sucrose equiv. |
|---|---|---|
| 67 | 0.425 gm APM (0.088)* | 11.2 |
| 68 | 0.212 gm APM (0.044) | 5.2 |
| 69 | 0.212 gm cyclamate (0.044) | 1.3 |
| Σ68+69 | | 6.5 |
| 70 | 0.106 gm APM (0.022)+0.318 gm cyclamate (0.066) | 9.4 |
| 71 | 0.106 gm APM (0.022) | 2.9 |
| 72 | 0.318 gm cyclamate (0.066) | 2.4 |
| Σ71+72 | | 5.3 |
| 73 | 0.212 gm APM (0.044)+0.212 gm cyclamate (0.044) | 11.1 |

* The sweetener concentration on an as-consumed % weight basis is given in parentheses.

These results show that the perceived sweetness of the sweetening component of the present invention was significantly greater than the sweetness expected from the sweetness of the individual sweeteners in the strawberry flavored gelatin dessert.

Examples 74—80

Examples 46—52 were repeated with an orange flavored gelatin dessert mix. The results are given below.

10

**0 140 517**

| Example | Sweetening component (per 10 gm gelatin mix) | Direct scale sucrose equiv. |
|---|---|---|
| 74 | 0.425 gm APM (0.088)* | 11.9 |
| 75 | 0.212 gm APM (0.044) | 5.3 |
| 76 | 0.212 gm Cyclamate (0.044) | 1.1 |
| Σ75+76 | | 6.4 |
| 77 | 0.106 gm APM (0.022)+0.318 gm Cyclamate (0.066) | 10.2 |
| 78 | 0.106 gm APM (0.022) | 3.3 |
| 79 | 0.318 gm Cyclamate (0.066) | 2.3 |
| Σ78+79 | | 5.6 |
| 80 | 0.212 gm APM (0.044)+0.212 gm Cyclamate (0.044) | 11.5 |

* The sweetener concentration, on an as-consumed, % weight basis, is given in parentheses.

These results show that the sweetness of the sweetening component of the present invention was significantly greater than the sweetness of the individual sweeteners in an orange flavored gelatin dessert.

Example 81

A reduced caloric pudding was prepared by blending 22.54 gm of an unsweetened, vanilla-flavored, instant pudding mix with 0.6 gm of a sweetening composition, which sweetening composition consisted essentially of 0.2 gm APM and 0.4 gm of cyclamate, and 474 gm of milk. The blend was allowed to set and resulted in a good tasting vanilla pudding. The sweetening composition in this use of the instant invention was used at a 0.12%, as consumed, weight basis.

The examples are illustrative and are not meant to be limiting. All parts and percentages used herein are by weight.

**Claims for the Contracting States: BE, CH, DE, FR, GB, IT, LI, LU, NL, SE**

1. A foodstuff comprising a food-acceptable, low calorie sweetening component and a food approved flavouring component wherein the proportion of sweetening composition is between 0.03% and 0.08% of the foodstuff on an as consumed, weight basis, said sweetening composition consists essentially of aspartame and a cyclamate and the ratio of aspartame to cyclamate is between 1 part aspartame to 6 parts cyclamate and 2 parts aspartame to 1 part cyclamate, and the pH of said foodstuff is between 2.0 and 7.5.

2. A foodstuff according to claim 1 wherein the pH of said foodstuff is between 2.0 and 5.5.

3. A foodstuff according to claim 1 or claim 2 wherein the ratio of aspartame to cyclamate is between 1 part aspartame to 3 parts cyclamate and 1 part aspartame to 1 part cyclamate.

4. A foodstuff according to any preceding claim wherein the proportion of flavoring component is between 0.001% and 0.5% of the foodstuff on an as consumed, weight basis.

5. A foodstuff as claimed in any preceding claim which further comprises a food approved coloring agent wherein the proportion of said coloring agent is between 0.00001% and 0.5% of the foodstuff on an as consumed, weight basis.

6. A foodstuff according to any preceding claim wherein said foodstuff is a low-calorie beverage.

7. A low-calorie beverage according to claim 6 which further comprises a buffering and acid component.

8. A foodstuff according to any of claims 1 to 5 wherein said foodstuff is a dry beverage mix.

9. A dry beverage mix according to claim 8 wherein the proportion of sweetening component is between 1% and 25%, by weight of said dry beverage mix.

10. A dry beverage mix according to claim 8 or claim 9 which further comprises a buffering and acid component.

11. A foodstuff according to any preceding claim wherein the flavoring component is a fruit-type flavoring.

12. A foodstuff according to any of claims 1 to 5 wherein the foodstuff is a low-calorie dessert.

13. A low-calorie dessert according to claim 12 wherein the dessert is a gelatin-type dessert.

14. A foodstuff according to any of claims 1 to 5 wherein said foodstuff is an aqueous condiment.

15. An aqueous condiment according to claim 14 wherein said condiment is a low-calorie pancake syrup.

16. A foodstuff according to any of claims 1 to 5 wherein said foodstuff is a chewing gum.

11

# 0 140 517

## Claims for the Contracting State: AT

1. A method of preparing a foodstuff comprising combining a food-acceptable, low calorie sweetening component and a food approved flavouring component wherein the sweetening composition is added in a proportion of between 0.03% and 0.08% of the foodstuff on an as consumed, weight basis, said sweetening composition consists essentially of aspartame and a cyclamate, the ratio of aspartame to cyclamate being from 1 part aspartame to 6 parts cyclamate and 2 parts aspartame to 1 part cyclamate, wherein the pH of said foodstuff is adjusted to between 2.0 and 7.5

2. A method according to claim 1 wherein the pH of said foodstuff is adjusted to between 2.0 and 5.5.

3. A method according to claim 1 or claim 2 wherein aspartame and cyclamate are combined in a proportion of from 1 part aspartame to 3 parts cyclamate to 1 part aspartame to 1 part cyclamate.

4. A method according to any one of claims 1 to 3 wherein the flavoring component is added in between 0.001% and 0.5% of the foodstuff on an as consumed, weight basis.

5. A method according to any one of claims 1 to 4 in which a food approved coloring agent is added in from 0.00001% and 0.5% of the foodstuff on an as consumed, weight basis.

6. A method according to claim 1 wherein said foodstuff is prepared as a low-calorie beverage.

7. A method according to claim 6 which further comprises adding a buffering and acid component to the beverage.

8. A method according to claim 1 wherein said foodstuff is prepared as a dry beverage mix.

9. A method according to claim 8 wherein the sweetening component is added in from 1% to 25%, by weight of said dry beverage mix.

10. A method according to claim 9 in which a buffering and acid component are added.

11. A method according to any of claims 1 to 5 wherein the flavoring component is prepared as a fruit-type flavoring.

12. A method according to any of claims 1 to 5 wherein the foodstuff is prepared as a low-calorie dessert.

13. A method according to claim 12 wherein the dessert prepared is a gelatin-type dessert.

14. A method according to any of claims 1 to 5 wherein said foodstuff is prepared as an aqueous condiment.

15. An method according to claim 14 wherein said condiment is prepared as a low-calorie pancake syrup.

16. A method according to any of claims 1 to 5 wherein said foodstuff is prepared as a chewing gum.

## Patentansprüche für die Vertragsstaaten: BE, CH, DE, FR, GB, IT, LI, LU, NL, SE

1. Lebensmittel mit einem lebensmittelechten kalorienarmen Süßungsmittel und einem lebensmittelechten Aromastoff, wobei der auf das Gewicht des für den Genuß bestimmten Lebensmittels bezogene Anteil des Süßungsmittels 0,03 bis 0,08 Gew.% beträgt, das Süßungsmittel im wesentlichen aus Aspartam und einem Cyclamat besteht, das Verhältnis von Aspartam zu Cyclamat zwischen 1 Teil Aspartam zu 6 Teilen Cyclamat und 2 Teilen Aspartam zu 1 Teil Cyclamat beträgt und das Nahrungsmittel einen pH-Wert zwischen 2,0 und 7,5 hat.

2. Lebensmittel nach Anspruch 1, dadurch gekennzeichnet, daß der pH-Wert des Lebensmittels zwischen 2,0 und 5,5 beträgt.

3. Lebensmittel nach Anspruch 1 oder 2, dadurch gekennzeichnet, daß das Verhältnis von Aspartam zu Cyclamat zwischen 1 Teil Aspartam zu 3 Teilen Cyclamat und 1 Teil Aspartam zu 1 Teil Cyclamat beträgt.

4. Lebensmittel nach einem der vorhergehenden Ansprüche, dadurch gekennzeichnet, daß der auf das Gewicht des für den Genuß bestimmten Lebensmittels bezogene Anteil des Aromastoffes 0,001 bis 0,5% beträgt.

5. Lebensmittel nach einem der vorhergehenden Ansprüche, das ferner einen lebensmittelechten färbenden Stoff enthält, dessen auf das Gewicht des für den Genuß bestimmten Lebensmittels bezogener Anteil 0,00001 bis 0,5% beträgt.

6. Lebensmittel nach einem der vorhergehenden Ansprüche, dadurch gekennzeichnet, daß das Lebensmittel ein kalorienarmes Getränk ist.

7. Kalorienarmes Lebensmittel nach Anspruch 6, das ferner einen säurehaltigen, puffernd wirkenden Bestandteil enthält.

8. Lebensmittel nach einem der Ansprüche 1 bis 5, dadurch gekennzeichnet, daß das Lebensmittel eine Getränketrockenmischung ist.

9. Getränketrockenmischung nach Anspruch 8, dadurch gekennzeichnet, daß der Anteil des Süßungsmittel 1 bis 25 Gew.% der Getränketrockenmischung beträgt.

10. Getränketrockenmischung nach Anspruch 8 oder 9 mit einem säurehaltigen, puffernd wirkenden Bestandteil.

11. Lebensmittel nach einem der vorhergehenden Ansprüche, dadurch gekennzeichnet, daß der Aromastoff ein Fruchtaromastoff ist.

12. Lebensmittel nach einem der Ansprüche 1 bis 5, dadurch gekennzeichnet, daß das Lebensmittel ein kalorienarmes Dessert ist.

13. Kalorienarmes Dessert nach Anspruch 12, dadurch gekennzeichnet, daß das Dessert ein gelatineartiges Dessert ist.

14. Lebensmittel nach einem der Ansprüche 1 bis 5, dadurch gekennzeichnet, daß das Lebensmittel ein wäßriges Gewürz ist.

15. Wäßriges Gewürz nach Anspruch 14, dadurch gekennzeichnet, daß das Gewürz ein kalorienarmer Pfannkuchensirup ist.

16. Lebensmittel nach einem der Ansprüche 1 bis 5, dadurch gekennzeichnet, daß das Lebensmittel ein Kaugummi ist.

**Patentansprüche für den Vertragsstaat: AT**

1. Verfahren zum Herstellen eines Lebensmittels, in dem ein lebensmittelechtes kalorienarmes Süßungsmittel und ein lebensmittelechter Aromatstoff miteinander vereinigt werden, dadurch gekennzeichnet, daß das Süßungsmittel in einem auf das Gewicht des für den Genuß bestimmten Lebensmittels bezogenen Anteil von 0,03 bis 0,08% zugesetzt wird und im wesentlichen aus Aspartam und einem Cyclamat besteht, daß das Verhältnis von Aspartam zu Cyclamat zwischen 1 Teil Aspartam zu 6 Teilen Cyclamat und 2 Teilen Aspartam zu 1 Teil Cyclamat beträgt und daß das Lebensmittel auf einen pH-Wert zwischen 2,0 und 7,5 eingestellt wird.

2. Verfahren nach Anspruch 1, dadurch gekennzeichnet, daß das Lebensmittel auf einen pH-Wert zwischen 2,0 und 5,5 eingestellt wird.

3. Verfahren nach Anspruch 1 oder 2, dadurch gekennzeichnet, daß das Aspartam und das Cyclamat in einem Verhältnis zwischen 1 Teil Aspartam zu 3 Teilen Cyclamat und 1 Teil Aspartam zu 1 Teil Cyclamat miteinander vereinigt werden.

4. Verfahren nach einem der Ansprüche 1 bis 3, dadurch gekennzeichnet, daß der Aromastoff in einem auf das Gewicht des für den Genuß bestimmten Lebensmittels bezogenen Anteil von 0,001 bis 0,5% zugesetzt wird.

5. Verfahren nach einem der Ansprüche 1 bis 4, dadurch gekennzeichnet, daß ein lebensmittelechter färbender Stoff in einem auf das Gewicht des für den Genuß bestimmten Lebensmittels bezogenen Anteil von 0,00001 bis 0,5% zugesetzt wird.

6. Verfahren nach Anspruch 1, dadurch gekennzeichnet, daß das Lebensmittel als kalorienarmes Getränk hergestellt wird.

7. Verfahren nach Anspruch 6, dadurch gekennzeichnet, daß dem Getränk ein säurehaltiger, puffernd wirkender Bestandteil zugesetzt wird.

8. Verfahren nach Anspruch 1, dadurch gekennzeichnet, daß das Lebensmittel als eine Getränketrockenmischung hergestellt wird.

9. Verfahren nach Anspruch 8, dadurch gekennzeichnet, daß das Süßungsmittel in einer Menge von 1 bis 25 Gew.% der Getränketrockenmischung zugesetzt wird.

10. Verfahren nach Anspruch 9, dadurch gekennzeichnet, daß ein säurehaltiger, puffernd wirkender Bestandteil zugesetzt wird.

11. Verfahren nach einem der Ansprüche 1 bis 5, dadurch gekennzeichnet, daß als Aromastoff ein Fruchtaromastoff zugesetzt wird.

12. Verfahren nach einem der Ansprüche 1 bis 5, dadurch gekennzeichnet, daß das Lebensmittel als kalorienarmes Dessert hergestellt wird.

13. Verfahren nach Anspruch 12, dadurch gekennzeichnet, daß das hergestellte Dessert ein gelatineartiges Dessert ist.

14. Verfahren nach einem der Ansprüche 1 bis 5, dadurch gekennzeichnet, daß das Lebensmittel als wäßriges Gewürz hergestellt wird.

15. Verfahren nach Anspruch 14, dadurch gekennzeichnet, daß das Gewürz als kalorienarmer Pfannkuchensirup hergestellt wird.

16. Verfahren nach einem der Ansprüche 1 bis 5, dadurch gekennzeichnet, daß das Lebensmittel als Kaugummi hergestellt wird.

**Revendications pour les Etats Contractants: BE, CH, DE, FR, GB, IT, LI, LU, NL, SE**

1. Produit alimentaire comprenant un constituant édulcorant à faible valeur calorique, admissible en alimentation et un constituant aromatisant agréé en alimentation dans lequel la proportion de composition édulcorante est de 0,03 à 0,08%, en poids rapporté à l'aliment tel que consommé, ladite composition édulcorante est essentiellement composée d'aspartame et d'un cyclamate et le rapport de l'aspartame au cyclamate est de 1 partie d'aspartame pour 6 parties de cyclamate à 2 parties d'aspartame pour 1 partie de cyclamate, et le pH dudit produit alimentaire est de 2,0 à 7,5.

2. Produit alimentaire selon la revendication 1, dans lequel le pH dudit produit alimentaire est de 2,0 à 5,5.

3. Produit alimentaire selon la revendication 1 ou 2, dans lequel le rapport de l'aspartame au cyclamate va de 1 partie d'aspartame pour 3 parties de cyclamate à 1 partie d'aspartame pour 1 partie de cyclamate.

4. Produit alimentaire selon l'une quelconque des revendications précédentes, dans lequel la proportion de constituant aromatisant est de 0,001 à 0,5%, en poids rapporté à l'aliment tel que consommé.

5. Produit alimentaire selon l'une quelconque des revendications précédentes qui comprend encore un agent colorant agréé en alimentation dans lequel la proportion dudit agent colorant est de 0,00001% à 0,5% en poids rapporté au produit alimentaire tel que consommé.

6. Produit alimentaire selon l'une quelconque des revendications précédentes dans lequel ledit produit alimentaire est une boisson à faible valeur calorique.

7. Boisson à faible valeur calorique selon la revendication 6 qui comprend encore un constituant de tamponnement et acide.

8. Produit alimentaire selon l'une quelconque des revendications 1 à 5, dans lequel ledit produit alimentaire est une préparation de boisson sèche.

9. Préparation de boisson sèche selon la revendication 8, dans laquelle la proportion de constituant édulcorant est de 1 à 25%, en poids rapporté à la préparation de boisson sèche.

10. Préparation de boisson sèche selon la revendication 8 ou la revendication 9 qui comprend encore un constituant de tamponnement et acide.

11. Produit alimentaire selon l'une quelconque des revendications précédentes dans lequel le constituant d'aromatisation est un agent d'aromatisation du type fruit.

12. Produit alimentaire selon l'une quelconque des revendications 1 à 5, dans lequel le produit alimentaire est un dessert à faible valeur calorique.

13. Dessert à faible valeur calorique selon la revendication 12, dans lequel le dessert est un dessert du type à la gélatine.

14. Produit alimentaire selon l'une quelconque des revendications 1 à 5, dans lequel le produit alimentaire est un condiment aqueux.

15. Condiment aqueux selon la revendication 14, dans lequel ledit condiment est un sirop pour crêpes à faible valeur calorique.

16. Produit alimentaire selon l'une quelconque des revendications 1 à 5, dans lequel ledit produit alimentaire est un chewing-gum.

**Revendications pour l'Etat Contractant: AT**

1. Procédé de préparation d'un produit alimentaire consistant à combiner un produit alimentaire comprenant un constituant édulcorant à faible valeur calorique, admissible en alimentation et un constituant aromatisant agréé en alimentation dans lequel la proportion de composition édulcorante est de 0,03 à 0,08%, en poids rapporté à l'aliment tel que consommé, ladite composition édulcorante est essentiellement composée d'aspartame et d'un cyclamate et le rapport de l'aspartame au cyclamate est de 1 partie d'aspartame pour 6 parties de cyclamate à 2 parties d'aspartame pour 1 partie de cyclamate, et le pH dudit produit alimentaire est de 2,0 à 7,5.

2. Procédé selon la revendication 1, dans lequel le pH dudit produit alimentaire est de 2,0 à 5,5.

3. Procédé selon la revendication 1 ou 2, dans lequel le rapport de l'aspartame au cyclamate va de 1 partie d'aspartame pour 3 parties de cyclamate à 1 partie d'aspartame pour 1 partie de cyclamate.

4. Procédé selon l'une quelconque des revendications 1 à 3, dans lequel la proportion de constituant aromatisant est de 0,001 à 0,5%, en poids rapporté à l'aliment tel que consommé.

5. Procédé selon l'une quelconque des revendications 1 à 4, dans lequel on ajoute un agent colorant agréé en alimentation dans lequel la proportion dudit agent colorant est de 0,00001% à 0,5% en poids rapporté au produit alimentaire tel que consommé.

6. Procédé selon la revendication 1, dans lequel ledit produit alimentaire est une boisson à faible valeur calorique.

7. Procédé selon la revendication 6 dans lequel on ajoute un agent de tamponnement et acide à la boisson.

8. Procédé selon la revendication 1, dans lequel ledit produit alimentaire est une préparation de boisson séche.

9. Procédé selon la revendication 1, dans lequel la proportion de constituant édulcorant est de 1 à 25%, en poids rapporté à la préparation de boisson sèche.

10. Procédé selon la revendication 9 dans lequel on ajoute un constituant de tamponnement et acide.

11. Procédé selon l'une quelconque des revendications 1 à 5, dans lequel le constituant d'aromatisation est un agent d'aromatisation du type fruit.

12. Procédé selon l'une quelconque des revendications 1 à 5, dans lequel le produit alimentaire est un dessert à faible valeur calorique.

13. Procédé selon la revendication 12, dans lequel le dessert est un dessert du type à la gélatine.

14. Procédé selon l'une quelconque des revendications 1 à 5, dans lequel le produit alimentaire est un condiment aqueux.

15. Procédé selon la revendication 14, dans lequel ledit condiment est un sirop pour crêpes à faible valeur calorique.

16. Procédé selon l'une quelconque des revendications 1 à 5, dans lequel ledit produit alimentaire est un chewing-gum.

14

# FIG.1

SWEETNESS OF 1:2 APM: CYCLAMATE IN A $_pH$ 3.2 FLAVORED FOOD STUFF.

# FIG.2

IDEAL SWEETENER (PERCEIVED SWEETNESS AS A FUNCTION OF SWEETENER CONCENTRATION)

FIG. 3

SWEETNESS OF APM AND CYCLAMATE INDIVIDUALLY ON AN AS CONSUMED, WEIGHT OF THE FOOD STUFF, BASIS

FIG.4

SWEETNESS OF 1:2 APM : CYCLAMATE IN A pH 3.2 BUFFERED SYSTEM

# FIG.5

SWEETNESS OF APM AND CYCLAMATE MIXTURES, WITH A CONSTANT SWEETENER % OF THE FOOD STUFF, ON AN AS CONSUMED BASIS.